# EUROPÄISCHE PATENTSCHRIFT

(11) **EP 1 249 327 B1**
(45) Veröffentlichungstag und Bekanntmachung des Hinweises auf die Patenterteilung: **20.10.2004**
(21) Anmeldenummer: 02006263.4
(22) Anmeldetag: 20.03.2002
(51) Int. Cl.: B28D 1/14

(54) **Werkzeug und Verfahren zum Bohren eines Bohrlochs und zum Setzen einer Spannhülse in das Bohrloch in einem Arbeitsgang**
Tool and process to drill a bore hole and to put a collet in this hole in a single process
Outil et procédé pour percer un trou de forage et pour mettre en place un manchon de serrage dans ce puit en une seule opération

(30) Priorität: 06.04.2001 DE 10117200
(43) Veröffentlichungstag der Anmeldung: 16.10.2002
(73) Patentinhaber: fischerwerke Artur Fischer GmbH & Co. KG, 72178 Waldachtal (DE)
(72) Erfinder: Frischmann, Albert, 79341 Kenzingen (DE); Semmler, Markus, 79312 Emmendingen (DE); Graf, Roland, 72160 Horb (DE); Fischer, Rainer, 72178 Waldachtal (DE); Schäffer, Marc, 72160 Horb-Bildechingen (DE)

(56) Entgegenhaltungen:
- WO-A-97/45646
- CH-A- 531 655
- DE-C- 448 762
- US-A- 1 467 451
- US-A- 3 353 437

## Beschreibung

Die Erfindung betrifft ein Werkzeug zum Bohren eines Bohrlochs und zum Setzen einer Spannhülse in das Bohrloch in einem Arbeitsgang gemäß dem Oberbegriff des Anspruchs 1. Desweiteren betrifft die Erfindung ein Verfahren zum Bohren eines Bohrlochs und zum Setzen einer Spannhülse in das Bohrloch in einem Arbeitsgang gemäß dem Oberbegriff des Anspruchs 4.

Aus der WO 97/45646 ist ein Befestigungselement bekannt, das eine Spannhülse aufweist. Die Spannhülse besteht üblicherweise aus Federstahl und weist einen in Längsrichtung durchgehenden Schlitz auf. Die Spannhülse wird in ein Bohrloch eingebracht, dessen Durchmesser kleiner als ein Durchmesser der unverformten Spannhülse ist. Beim Einbringen in das Bohrloch wird die Spannhülse elastisch zusammengedrückt, sie hält klemmend durch Reibschluss aufgrund ihrer Federelastizität im Bohrloch. Zur Befestigung von Gegenständen kann die Spannhülse einen radial abstehenden Kragen oder eine Rohrschelle an ihrem hinteren Ende aufweisen. Auch kann die Spannhülse bspw. als Dämmstoffhalter ausgebildet sein und zu diesem Zweck ihr hinteres Ende mit einem rohrförmigen Hohlschaft umspritzt sein, der einen Teller mit einem Mittelloch an seinem hinteren Ende aufweist.

Zum Setzen der Spannhülse sieht die genannte Druckschrift vor, die Spannhülse auf einen Steinbohrer aufzusetzen, der eine Hartmetallplatte aufweist, die quer in sein vorderes Ende eingesetzt ist. Ein Durchmesser des Steinbohrers ist so auf die Spannhülse abgestimmt, dass sie auf dem Steinbohrer radial zusammenfedern kann. Die Hartmetallplatte steht radial über den Steinbohrer über, sie ist allerdings kleiner als ein Durchmesser der unverformten Spannhülse. Ein mit dem Steinbohrer gebohrtes Bohrloch weist also einen kleineren Durchmesser als die unverformte Spannhülse auf, die Spannhülse wird beim Einbringen in das Bohrloch elastisch zusammengedrückt. Der Steinbohrer weist eine Ringschulter als Axialanschlag für die auf ihn aufgesetzte Spannhülse auf. Zum Bohren eines Bohrlochs und zum Setzen der Spannhülse in das Bohrloch wird der Steinbohrer drehend und ggf. mit Schlagunterstützung angetrieben und auf diese Weise ein Bohrloch in ein Mauerwerk oder dgl. gebohrt. Die an der Ringschulter des Steinbohrers anliegende Spannhülse wird beim Bohren in das Bohrloch eingebracht, ggf. durch die Schlagunterstützung in das Bohrloch eingetrieben. Dabei ist ein vorderer Stirnrand der Spannhülse als Ringschneide ausgebildet, die insbesondere bei Schlagunterstützung während des Bohrens das Bohrloch meißelnd aufweitet. Ist die Spannhülse in das Bohrloch gesetzt, wird der Steinbohrer angehalten und aus der Spannhülse herausgezogen, wozu der Bohrer so gedreht werden muss, dass seine Hartmetallplatte mit dem Schlitz der Spannhülse fluchtet, so dass die radial über den Steinbohrer vorstehende Hartmetallplatte durch den Schlitz der Spannhülse herausgezogen werden kann. Die vorbekannte Spannhülse wird also in einem Arbeitsgang mit dem Bohren des Bohrlochs in das Bohrloch gesetzt. Nachteilig ist allerdings, dass die Spannhülse nicht in hartes Material wie bspw. Beton gesetzt werden kann, da hierzu die Härte und Festigkeit ihres vorderen, die Ringschneide bildenden Stirnrandes nicht ausreicht. Desweiteren besteht die Gefahr eines Klemmens des Steinbohrers durch die im Bohrloch radial zusammengedrückte Spannhülse. Zudem sind die Spannhülse und der Steinbohrer mechanisch und thermisch hoch belastet, da entweder die Spannhülse zusammen mit dem Steinbohrer im Bohrloch oder der Steinbohrer in der Spannhülse rotiert.

Der Erfindung liegt die Aufgabe zugrunde, ein Werkzeug und ein Verfahren zum Bohren eines Bohrlochs und zum Setzen einer Spannhülse in das Bohrloch in einem Arbeitsgang vorzuschlagen, das die vorstehend genannten Nachteile vermeidet und das insbesondere auch in hartem Werkstoff wie bspw. Beton anwendbar ist.

Diese Aufgabe wird erfindungsgemäß durch die Merkmale der Ansprüche 1 oder 4 gelöst. Das erfindungsgemäße Werkzeug mit den Merkmalen des Anspruchs 1 weist einen Schaft mit einem Axialanschlag für die Spannhülse sowie einen auf ein vorderes Ende des Schafts aufsetzbaren Bohrkopf auf. Über eine Kupplung ist der Bohrkopf drehfest und lösbar mit dem Schaft verbunden. Zum Bohren des Bohrlochs und zum Setzen der Spannhülse in das Bohrloch in einem Arbeitsgang wird erfindungsgemäß die Spannhülse auf den Schaft und anschließend der Bohrkopf drehfest auf das vordere Ende des Schafts aufgesetzt. Der Bohrkopf steht radial über den Schaft über, er ist allerdings kleiner als ein Durchmesser der unverformten Spannhülse. Anschließend wird der Schaft und über diesen der Bohrkopf drehend angetrieben und das Bohrloch gebohrt. Da die auf den Schaft aufgesetzte Spannhülse am Axialanschlag des Schafts anliegt, wird die Spannhülse beim Bohren des Bohrlochs in das Bohrloch eingebracht. Das Bohren kann schlagunterstützt erfolgen, wobei durch Schlagunterstützung die Spannhülse in das Bohrloch eingetrieben wird. Ein Durchmesser des Bohrlochs ist kleiner als die unverformte Spannhülse, die Spannhülse wird beim Einbringen in das Bohrloch elastisch zusammengedrückt und hält dadurch klemmend durch Reibschluss im Bohrloch. Ist das Setzen der Spannhülse beendet, wird der Schaft aus der Spannhülse herausgezogen, wobei der Bohrkopf als verlorenes Teil im Bohrloch verbleibt.

Durch die Verwendung eines Bohrkopfs kann der Bohrkopf aus einem ausreichend harten Werkstoff zum Bohren in hartes Material wie bspw. Beton hergestellt sein, der Bohrkopf kann hartmetallbestückt sein. Da der Bohrkopf nur einmal verwendet wird, kann er aus einem preisgünstigen Werkstoff hergestellt sein, das nach der einmaligen Bohrung verschließen ist. Da das Bohrloch ausschließlich mit dem Bohrkopf gebohrt und von der Spannhülse nicht aufgeweitet wird, kann eine herkömmliche Spannhülse gesetzt werden und das Setzen der Spannhülse ist auch in hartem Material wie bspw. Beton ohne weiteres möglich. Der Schaft des erfindungsgemäßen Werkzeugs kann mit einem Untermaß auch in bezug auf die im Bohrloch zusammengedrückte Spannhülse ausgebildet sein, so dass Reibung und thermische Belastung zwischen Schaft und Spannhülse gering sind, die Spannhülse dreht beim Bohren nicht mit. Ein Klemmen des Schafts des erfindungsgemäßen Werkzeugs in der Spannhülse ist nicht zu befürchten.

Die Kupplung, die den Bohrkopf lösbar mit dem Schaft verbindet, ist in vorzugsweiser Ausgestaltung der Erfindung als Steckkupplung ausgebildet, die Drehbewegung wird durch Formschluss vom Schaft auf den Bohrkopf übertragen. Die Kupplung kann bspw. einen Mehrkant, eine Vielzahnverbindung, eine Torx-Aufnahme oder einen in einen Querschlitz eingreifenden Querstift aufweisen. Der Bohrkopf kann klemmend bspw. mit einer federbeaufschlagten Kugel, einer Blattfeder, einem Gummiring oder dgl. mehr ausgebildet sein, was die Handhabung des Werkzeugs vereinfacht. Eine Steckkupplung hat den Vorteil, das sich der Bohrkopf schnell auf den Schaft aufsetzen und insbesondere nach dem Setzen der Spannhülse durch einfaches Herausziehen des Schafts lösen lässt. Das erfindungsgemäße Verfahren gemäß Ansprüchen 4 und 5 ist vorstehend bei der Erläuterung des erfindungsgemäßen Werkzeugs dargestellt worden.

Die Erfindung wird nachfolgend anhand eines in der Zeichnung dargestellten Ausführungsbeispiels näher erläutert. Es zeigen:
- Figur 1: ein erfindungsgemäßes Werkzeug in Explosionsdarstellung in Seitenansicht; und
- Figuren 2 und 3: zwei Setzschritte des erfindungsgemäßen Verfahrens.

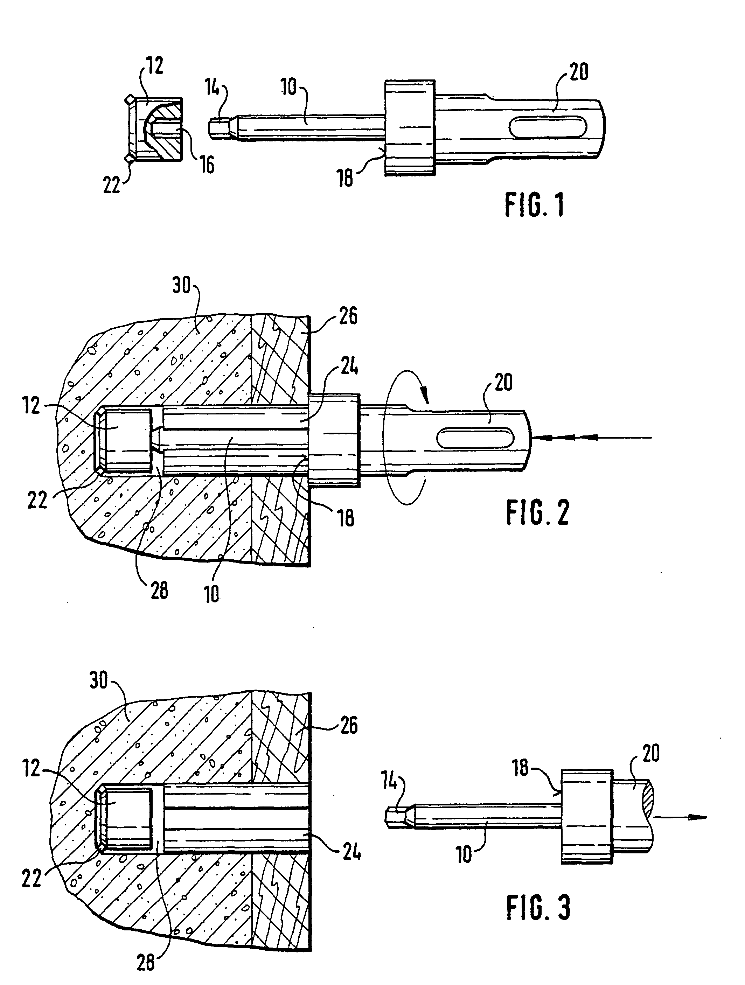

Das in Figur 1 dargestellte erfindungsgemäße Werkzeug weist einen Schaft 10 und einen Bohrkopf 12 auf, die mittels einer Kupplung 14, 16 drehfest und lösbar miteinander verbindbar sind. Die Kupplung 14, 16 ist als Steckkupplung ausgebildet, sie weist einen Außensechskant 14 an einem vorderen Ende des Schafts 10 und einen klemmend aufsteckbaren Innensechskant 16 im Bohrkopf 12 auf. Die Kupplung 14, 16 überträgt eine Drehbewegung des Schafts 10 durch Formschluss auf den Bohrkopf 12. Es sind andere Kupplungsformen wie bspw. eine Torx-Aufnahme möglich.

Im Anschluss an den Außensechskant 14 weist der Schaft 10 einen zylindrischen Abschnitt auf, der in eine Ringschulter 18 übergeht, die einen Axialanschlag für eine Spannhülse bildet. Ein hinterer Abschnitt des Schafts 10 ist als Spannschaft 20 zum Einspannen in ein Bohrfutter einer nicht dargestellten Schlagbohrmaschine oder eines Bohrhammers ausgebildet.

Der Bohrkopf 12 ist ein zylindrisches Teil, das radial über den anschließenden Abschnitt des Schafts 10 übersteht. An einer vorderen Stirnseite weist der Bohrkopf 12 zwei schräg nach vorn und außen stehende Hartmetallstifte 22 als Bohrschneiden auf. Der Bohrkopf 12 ist als Einwegteil oder verlorenes Teil vorgesehen, es wird für jeden Bohrund Setzvorgang eine neuer Bohrkopf 12 benötigt.

Gemäß dem erfindungsgemäßen Verfahren wird eine Spannhülse 24 auf den Schaft 10 aufgesetzt. Die Spannhülse 24 ist ein hülsenförmiges, in radialer Richtung federelastisches und einen in Längsrichtung durchgehend ausgebildeten Längsschlitz aufweisendes Teil, das üblicherweise aus Federstahl hergestellt ist. Ein Außendurchmesser der unverformten Spannhülse 22 ist größer als ein größter Abstand der Hartmetallstifte 22 voneinander, d.h. der Außendurchmesser der unverformten Spannhülse 24 ist größer als ein mit dem Bohrkopf 12 gebohrtes Bohrloch. Nach dem Aufsetzen der Spannhülse 24 auf den Schaft 10 wird der Bohrkopf 12 mittels der Kupplung 14, 16 auf den Schaft 10 gesteckt.

Das erfindungsgemäße Werkzeug 10, 12 wird oder ist mit seinem Spannschaft 20 in ein Bohrfutter einer nicht dargestellten Schlagbohrmaschine oder eines Bohrhammers eingesetzt, mit dem das Werkzeug 10, 12 zum Bohren drehend angetrieben und schlagend beaufschlag wird. Mit dem Werkzeug 10, 12 wird bspw. durch ein zu befestigendes Bauteil 26 hindurch ein Bohrloch 28 in bspw. ein Mauerwerk 30 aus Beton gebohrt. Die auf den Schaft 10 aufgesetzte Spannhülse 24, die sich an der den Axialanschlag bildenden Ringschulter 18 des Schafts 10 axial abstützt, wird während des Bohrens durch die schlagende Beaufschlagung durch das zu befestigende Bauteil 26 hindurch in das Bohrloch 28 eingetrieben. Dabei wird die Spannhülse 24 elastisch auf einen Durchmesser des Bohrlochs 28 zusammengedrückt, sie hält klemmend durch Reibschluss im Bohrloch 28. Ein Durchmesser des Schafts 10, auf den die Spannhülse 24 aufgesetzt ist, ist so bemessen, dass ein Zwischenraum zwischen dem Schaft 10 und der Spannhülse 24 auch dann noch besteht, wenn die Spannhülse 24 auf den Durchmesser des Bohrlochs 28 zusammengedrückt ist. Es besteht also Spiel zwischen dem Schaft 10 und der zusammengedrückten Spannhülse 24, das Werkzeug 10, 12 kann sich in der Spannhülse 24 drehen, die Spannhülse 24 dreht sich beim Eintreiben in das Bohrloch 28 nicht mit dem Werkzeug 10, 12 mit.

Der Bohr- und Setzvorgang ist abgeschlossen, wenn die Ringschulter 18 des Schafts 10 auf dem zu befestigenden Gegenstand 26 aufsitzt. Dieser Zustand ist in Figur 2 dargestellt. Die Bohrmaschine wird ausgeschalten und der Schaft 10 wird aus dem Bohrkopf 12 und der Spannhülse 10 herausgezogen. Der Bohrkopf 12 verbleibt als verlorenes Teil vor einem setzseitigen Ende der Spannhülse 24 am Grund des Bohrlochs 28 (Figur 3). Es ist für jeden Bohr- und Setzvorgang ein neuer Bohrkopf 12 erforderlich. Die Spannhülse 24 hält den zu befestigenden Gegenstand 26 klemmend durch Reibschluss im Mauerwerk 30. Die Spannhülse 24 kann bspw. auch einen radial nach außen umgeformten Kragen an ihrem hinteren Ende aufweisen, um den zu befestigenden Gegenstand 26 am Mauerwerk 30 zu halten (nicht dargestellt). Auch kann die Spannhülse 24 eine Kabelschelle an ihrem hinteren Ende aufweisen (nicht dargestellt). Ebenso ist es möglich, die Spannhülse 24 als Dämmstoffhalter auszubilden und zu diesem Zweck einen Hohlschaft mit einem ein Mittelloch aufweisenden Teller an seinem hinteren Ende am hinteren Ende der Spannhülse 24 vorzusehen (nicht dargestellt).

## Patentansprüche

1. Werkzeug zum Bohren eines Bohrlochs und zum Setzen einer Spannhülse in das Bohrloch in einem Arbeitsgang, wobei das Werkzeug einen Schaft mit einem Axialanschlag für die Spannhülse aufweist, **dadurch gekennzeichnet, dass** das Werkzeug (10, 12) einen Bohrkopf (12) aufweist, der radial über den Schaft (10) übersteht, und dass das Werkzeug (10, 12) eine Kupplung (14, 16) aufweist, die den Bohrkopf (12) drehfest und lösbar mit dem Schaft (10) verbindet.

2. Werkzeug nach Anspruch 1, **dadurch gekennzeichnet, dass** der Schaft (10) eine Ringschulter (18) als Axialanschlag aufweist.

3. Werkzeug nach Anspruch 1, **dadurch gekennzeichnet, dass** die Kupplung (14, 16) als Steckkupplung ausgebildet ist und einen Formschluss zur Übertragung einer Drehbewegung aufweist.

4. Verfahren zum Bohren eines Bohrlochs und zum Setzen einer Spannhülse in das Bohrloch in einem Arbeitsgang, wobei die Spannhülse auf einen Schaft, der einen Axialanschlag für die Spannhülse aufweist, aufgesetzt wird, **dadurch gekennzeichnet, dass** auf ein vorderes Ende des Schafts (10) ein Bohrkopf (12) drehfest aufgesetzt wird, der radial über den Schaft (10) übersteht und der radial kleiner als die Spannhülse (24) ist, dass der Schaft (10) drehend angetrieben und das Bohrloch (28) gebohrt wird, wobei gleichzeitig mit dem Bohren des Bohrlochs (28) die Spannhülse (24) in das Bohrloch (28) eingebracht wird, und dass nach dem Bohren des Bohrlochs (28) und dem Einbringen der Spannhülse (24) in das Bohrloch (28) der Schaft (10) herausgezogen wird, wobei der Bohrkopf (12) im Bohrloch (28) verbleibt.

5. Verfahren nach Anspruch 4, **dadurch gekennzeichnet, dass** der Schaft (10) beim Bohren des Bohrlochs (28) schlagend beaufschlagt wird.

## Claims

1. Tool for drilling a drilled hole and placing a clamping sleeve in the drilled hole in one operation, the tool comprising a shank having an axial stop for the clamping sleeve, **characterised in that** the tool (10, 12) has a drilling head (12) which projects radially further than the shank (10); and the tool (10, 12) has a coupling (14, 16) which connects the drilling head (12) to the shank (10) releasably and in a manner ensuring conjoint rotation.

2. Tool according to claim 1, **characterised in that** the shank (10) has an annular shoulder (18) as the axial stop.

3. Tool according to claim 1, **characterised in that** the coupling (14, 16) is in the form of a push-in coupling and has an interlocking connection for transmission of rotary motion.

4. Method of drilling a drilled hole and placing a clamping sleeve in the drilled hole in one operation, the clamping sleeve being mounted on a shank having an axial stop for the clamping sleeve, **characterised in that** a drilling head (12) is mounted on the front end of the shank (10) in a manner ensuring conjoint rotation, which drilling head (12) projects radially further than the shank (10) and is radially smaller than the clamping sleeve (24); the shank (10) is driven in rotation and the hole (28) is drilled, the clamping sleeve (24) being introduced into the drilled hole (28) at the same time as the hole (28) is being drilled; and, after the hole (28) has been drilled and the clamping sleeve (24) has been introduced into the drilled hole (28), the shank (10) is withdrawn, whereupon the drilling head (12) remains in the drilled hole (28).

5. Method according to claim 4, **characterised in that** the shank (10) is subjected to percussive action during drilling of the hole (28).

## Revendications

1. Outil pour percer un trou de forage et pour installer un manchon dans le trou de forage pendant une phase de travail sachant que l'outil comporte un arbre avec une butée axiale pour le manchon, **caractérisé en ce que** l'outil (10, 12) comporte un embout d'alésage (12), qui dépasse de manière radiale au-dessus de l'arbre (10) et **en ce que** l'outil (10, 12) comporte un couplage (14, 16) qui relie l'embout d'alésage (12) à l'arbre (10) de manière amovible et en résistant à la torsion.

2. Outil selon la revendication 1, **caractérisé en ce que** l'arbre (10) comporte un épaulement circulaire (18) comme butée axiale.

3. Outil selon la revendication 1, **caractérisé en ce que** le couplage (14, 16) est configuré comme un couplage à fiches et comporte une fermeture de moule pour la transmission d'un mouvement de torsion.

4. Procédé pour percer un trou de forage et pour installer un manchon dans le trou de forage pendant une phase de travail, sachant que le manchon est installé sur un arbre, qui comporte une butée axiale pour le manchon, **caractérisé en ce qu'**un embout d'alésage (12) est installé en.résistant à la torsion sur une extrémité avant de l'arbre (10), embout qui dépasse de manière radiale au-dessus de l'arbre (10) et qui est radialement plus petit que le manchon (24), **en ce que** l'arbre (10) est entraîné par rotation et que le trou de forage (28) est percé, sachant qu'en même temps que le perçage du trou de forage (28) le manchon (24) est introduit dans le trou de forage (28) et **en ce qu'**après le perçage du trou de forage (28) et l'introduction du manchon (24) dans le trou de forage (28) l'arbre (10) est retiré, sachant que l'embout d'alésage (12) reste dans le trou de forage (28).

5. Procédé selon la revendication 4, **caractérisé en ce que** l'arbre (10) est admis en frappant lors du perçage du trou de forage (28).
